# EUROPEAN PATENT SPECIFICATION

(11) **EP 3 561 666 B1**
(45) Date of publication and mention of the grant of the patent: **09.09.2020**
(21) Application number: 18208054.9
(22) Date of filing: 23.11.2018
(51) Int. Cl.: H04W 12/00, G06F 8/65, H04W 8/00, H04W 4/50, H04W 4/80

(54) **MOBILE DEVICE WITH ACCESS RIGHTS MANAGEMENT**
MOBILE VORRICHTUNG MIT ZUGRIFFSRECHTEVERWALTUNG
DISPOSITIF MOBILE AVEC GESTION DE DROITS D'ACCÈS

(30) Priority: 23.04.2018 EP 18168672
(43) Date of publication of application: 30.10.2019
(73) Proprietor: Siemens Schweiz AG, 8047 Zürich (CH)
(72) Inventor: Boscolo Bragadin, Ivano, 6315 Oberägeri (CH)
(74) Representative: Maier, Daniel Oliver

(56) References cited:
- US-A1- 2007 239 988
- US-A1- 2009 077 634
- US-A1- 2016 364 223
- Anonymous: "Identity function - Wikipedia", , 19 February 2018 (2018-02-19), XP055496600, Retrieved from the Internet: URL:https://en.wikipedia.org/w/index.php?t itle=Identity_function&oldid=826467089 [retrieved on 2018-08-01]

## Description

### Background

The present disclosure relates to a mobile device for carrying out maintenance of an appliance. More particularly, the instant disclosure focuses on a mobile device with functionality to manage access to an appliance.

Technical appliances such as control and automation equipment as well as heating, air-conditioning and/or ventilation equipment commonly need maintenance. Maintenance of an appliance may be carried out using a mobile maintenance unit such as a mobile computer and/or a tablet computer and/or a mobile handheld device. To that end, each of those units provides connectivity to the appliance. In addition, each unit provides connectivity to a cloud computer.

The international patent application WO2004/024232A1 was filed on 11 September 2003. WO2004/024232A1 teaches a medical device status information system. WO2004/024232A1 discloses a docking station 60 and a status monitor 62. A network 74 enables communication between docking station 60 and status monitor 62. The docking station 60 provides an automated external defibrillator 60 with a status indicator 88. Status indicator 88 may comprise a visual annunciator 20 such as a light-emitting diode.

The patent US5089809 issued on 18 February 1992. An application 623356 for US5089809 was filed on 7 December 1990. US5089809 deals with remote indication of appliance status. An appliance 22 such as a washing machine is shown on FIG 1 of US5089809. Appliance 22 connects to the AC wiring of a complex via a power cord 24 and a plug 26. The power cord 24 and the plug 26 also couple appliance 22 to a transmitter 28. Transmitter 28 upon detection of a predetermined condition of appliance 22 transmits a signal representing the detected condition to a remote status module 54. In an embodiment, transmitter 28 comprises a code generator 90 and a radio frequency generator 86. The code generator 90 is employed to modulate a radio frequency signal. A 160 kHz signal is then applied to lines 88 via radio frequency generator 86.

The patent US4916439 issued on 10 April 1990. An application 45725 for US4916439 was filed on 30 April 1987. US4916439 teaches a remote display arrangement for appliances. A remote display arrangement 10 with a detector 16 and with a receiving unit 18 is shown on FIG 1A of US4916439. Detector 18 is communicatively coupled to a washing machine 12 and to a dryer 22. Detector 16 provides an antenna 24 to transmit signals to receiving unit 18. Receiving unit 18 provides an antenna 26 to receive signals from detector 16. US4916439 also teaches an alternate receiving unit 300 with a liquid crystal display 310. Various types of appliance status signals such as cycle running time of a washing machine 12 or of a dryer 22 may be displayed on liquid crystal display 310.

The patent application US2016/0364223A1 was filed on 11 June 2015. The application was published on 15 December 2016. US2016/0364223A1 discloses methods and systems for providing updates to and receiving data from devices having short range wireless communication capabilities. The application deals with distributing software update packages amongst Internet-of-Things (IoT) devices 111 - 113 via a user's communication device 102. US2016/0364223A1 focuses on software updates for IoT devices dispersed over a large geographic area. The user's communication device 102 has access to a network 110 via a radio transceiver 606 such as a transceiver for a 4G cellular network. That way, a device identification of an IoT device 111 - 113 can be forwarded via the network 110 to a remote server 104. The remote server 104 then checks whether the device identification is stored in a database 139. According to US2016/0364223A1, the remote server 104, not the user's communication device 102, determines whether a software update package is required for an IoT device 111 - 113. Also, the identification check disclosed by US2016/0364223A1 relies on access of the user's communication device 102 to a network 110 such as the Internet.

The patent application US2009/0077634A1 was filed on 19 September 2007. The application was published on 19 March 2009. US2009/0077634A1 discloses a firmware update method and a system using the same.

The patent application US2007/239988A1 was filed on 31 March 2006. The application was published on 11 October 2007. US2007/239988A1 deals with accessing data storage devices.

The present disclosure deals with management of access rights by a mobile device. The solution of the instant disclosure inhibits personnel error and confers advantages in terms of improved security.

### Summary

The instant disclosure teaches a mobile maintenance device such as a mobile computer and/or a tablet computer and/or a mobile handheld device and/or a mobile phone and/or a smart mobile phone. The mobile maintenance device provides functionality to read an identity of an appliance such as an automation appliance, a control appliance, a heating, ventilation, air-conditioning appliance, a smart valve appliance, and/or a hazard detection appliance. The identity may, by way of non-limiting example, be a serial number and/or a media access control address of a network adaptor and/or a cryptographic key. Once the identity data are retrieved, the mobile maintenance device compares the identity data and/or a value computed from the identity data to entries on a whitelist.

The present disclosure provides a mobile maintenance device comprising : at least one first communication interface configured to receive from an appliance identity data indicative of an identity of the appliance; a memory; a processor communicatively coupled to the at least one first communication interface and to the memory, the processor being configured to: receive identity data indicative of the identity of the appliance from the at least one first communication interface; read from the memory a register with a plurality of entries; produce a digital value as a function of the received identity data, the function of the received identity data being selected from one of: an identity function; or a hash function; compare the digital value to the plurality of entries of the register; and carry out technical maintenance on the appliance if the digital value matches at least one entry of the plurality of entries of the register.

The register with a plurality of entries preferably is a whitelist, yet more preferably is a whitelist wherein each entry is associated with an appliance.

The memory advantageously is a memory readable by the processor. It is envisaged that the memory is a non-volatile memory. In an embodiment, the memory has stored on the memory the register with a plurality of entries. It is also envisaged that the memory is a non-volatile memory with built-in encryption. That is, any register with a plurality of entries and/or any whitelist stored on the memory needs to be deciphered using a cryptographic key. Also, any register with a plurality of entries and/or any whitelist is not readily accessible when the memory is removed from the mobile maintenance device. Encrypted memory confers advantages in terms of improved security.

In an embodiment, the processor is configured to receive from the appliance via the at least one first communication interface identity data indicative of the identity of the appliance.

An identity function returns its argument.

It is envisaged that the hash function is selected from one of
a message digest 5 type hash function;
a secure hash algorithm 1 type hash function;
a secure hash algorithm 2 type hash function;
a secure hash algorithm 3 type hash function;
a secure hash algorithm 256 type hash function; or
a bcrypt type hash function.

In an embodiment, the hash function is a salted hash function and is based on, preferably is directly based on, at least one of:
a message digest 5 algorithm;
a secure hash algorithm no 1;
a secure hash algorithm no 2;
a secure hash algorithm no 3;
a secure hash algorithm no 256; or
a bcrypt algorithm.

It is also another object of the instant disclosure to provide any of the aforementioned mobile maintenance devices, wherein the at least one first communication interface is selected from one of:
a camera;
a quick response code scanner;
a barcode scanner;
a wireless network interface;
a power-over-ethernet interface in accordance with IEEE 802.3af-2003, June 2003;
a near field communication reader;
a wired network interface; or
a smart card reader.

In an embodiment, the at least one first communication interface is configured for unidirectional communication with the appliance. That is, the at least one first communication interface may receive data from the appliance. There is, however, no communication (channel) from the first communication interface to the appliance.

It is also another object of the instant disclosure to provide any of the aforementioned mobile maintenance devices, wherein the identity data is selected from one of:
a media access control address;
a serial number; or
a cryptographic key.

According to an aspect, the cryptographic key is associated with an asymmetric pair of keys. The cryptographic key may, in particular, be a private key or a public key.

Public/private keys allow for authentication. Public/private keys put a remote server and/or the appliance in a position to verify the identity of mobile maintenance device.

It is also another object of the instant disclosure to provide any of the aforementioned mobile maintenance devices, wherein at least one entry of the plurality of entries of the register is associated with a privileged appliance, the privileged appliance being an appliance configured to be technically maintained by the mobile maintenance device.

It is a related object of the instant disclosure to provide any of the aforementioned mobile maintenance devices, wherein all entries of the plurality of entries of the register are associated with a privileged appliance, a privileged appliance being an appliance configured to be technically maintained by the mobile maintenance device.

It is yet another object of the instant disclosure to provide any of the aforementioned mobile maintenance devices, wherein technical maintenance on the appliance is selected from one of or from at least one of:
an operational check of the appliance;
setting a technical parameter of the appliance;
a functional check of the appliance; or
a firmware update of the appliance.

The technical parameter can, by way of non-limiting example, be a set point value and/or a configuration value.

It is still another object of the instant disclosure to provide any of the aforementioned mobile maintenance devices, wherein the mobile maintenance device comprises at least one maintenance interface configured to send an instruction to the appliance; the processor being communicatively coupled with, in particular directly coupled with, the at least one maintenance interface, the processor being configured to:
send via the at least one maintenance interface an instruction to carry out technical maintenance on the appliance if the digital value matches at least one entry of the plurality of entries of the register, the instruction to carry out technical maintenance being selected from one of:
an instruction to perform an operational check of the appliance;
an instruction to set a technical parameter of the appliance;
an instruction to perform a functional check of the appliance; or
an instruction to update the firmware of the appliance.

The technical parameter can, by way of non-limiting example, be a set point value and/or a configuration value.

It is envisaged that the maintenance interface is a communication interface. The maintenance interface is advantageously configured for bidirectional communication with an appliance. The at least one first communication interface is preferably different from the at least one maintenance interface.

The maintenance interface can, by way of non-limiting example, be an interface for communication according to ISO 11898-1:2003 and/or for communication according to IEEE 802.3ax, in particular according to IEEE 802.3af:2003 and/or according to IEEE 802.3at:2009 and/or according to IEEE 802.3bt:2017. The maintenance interface enables the mobile maintenance device to automatically carry out technical maintenance of an appliance.

It is a further object of the instant disclosure to provide any of the aforementioned mobile maintenance devices, wherein the mobile maintenance device comprises at least one second communication interface configured for bidirectional communication with a remote server; the processor being communicatively coupled with, in particular directly coupled with, the at least one second communication interface, the processor being configured to:
receive whitelist data indicative of a register with a plurality of entries from the at least one second communication interface;
produce the register with a plurality of entries from the received whitelist data; and
write the register with a plurality of entries to the memory.

According to an aspect, the remote server is separate from the appliance. Download of whitelist data from a remote server enables seamless updates of the whitelist data stored locally on a mobile maintenance device.

The remote server is advantageously located remotely from the mobile maintenance device. The at least one first communication interface is preferably different from the at least one second communication interface.

In an embodiment, the processor is configured to receive from the remote server via the at least one second communication interface whitelist data indicative of a register with a plurality of entries.

It is still a further object of the instant disclosure to provide any of the aforementioned mobile maintenance devices, wherein the mobile maintenance device comprises at least one user interface configured to receive inputs from a user of the mobile maintenance device; the processor being communicatively coupled with, in particular directly coupled with, the at least one user interface, the processor being configured to:
receive credentials data indicative of user credentials from the at least one user interface;
encrypt the credentials data to produce encrypted credentials data; and
send the encrypted credentials data to the remote server via the at least one second communication interface.

In an embodiment, the processor encrypts the credentials data using a cryptographic key derived from a Diffie-Hellman key exchange. Use of a cryptographic key derived from a Diffie-Helman key change inhibits man-in-the-middle attacks. In another embodiment, the processor reads a cryptographic key from the memory and encrypts the credentials data using the cryptographic key read from the memory. In yet another embodiment, the processor receives a key from the at least one second communication interface and encrypts the credentials data using the key received from the at least one second communication interface. In still another embodiment, the processor receives a key from the remote server via the at least one second communication interface and encrypts the credentials data using the key received from the remote server.

It is also an object of the instant disclosure to provide any of the aforementioned mobile maintenance devices, wherein the processor comprises an application-specific integrated circuit, the processor being configured to:
encrypt the credentials data using the application-specific integrated circuit to produce encrypted credentials data.

According to an aspect, the application-specific integrated circuit is an integral part of the processor. An application-specific integrated circuit is generally more effective at encryption tasks compared to a general-purpose processor. That way, the application-specific integrated circuit saves energy and/or reduces the computing time required for encryption.

It is a further object of the instant disclosure to provide any of the aforementioned mobile maintenance devices, wherein the mobile maintenance device comprises at least one user interface configured to receive inputs from a user of the mobile maintenance device; the processor being communicatively coupled with, in particular directly coupled with, the at least one user interface, the processor being configured to:
receive credentials data indicative of user credentials from the at least one user interface; and
produce the digital value as a function of, preferably as a direct function of, the received identity data and of the received credentials data, the function being a hash function.

In an embodiment, the processor is configured to receive from a user via the at least one user interface credentials data indicative of user credentials. User credentials advantageously comprise a username and/or a password. User credentials may also comprise biometric information.

The at least one user interface preferably comprises at least one of:
a touch-sensitive display;
a keyboard;
a fingerprint scanner;
a camera.

A touch-sensitive display can be used for the purposes of displaying information and of reading user input. A touch-sensitive display is a dual-purpose device that reduces complexity and cost. Use of a fingerprint scanner enables a mobile maintenance device that provides encryption based on, preferably directly based on, an operator's individual biometric data.

It is a further object of the instant disclosure to provide any of the aforementioned mobile maintenance devices, wherein the memory comprises a non-volatile and protected portion, the processor being configured to:
carry out a privileged process such that the privileged process is exclusively allowed to
read from the non-volatile and protected portion of the memory the register with a plurality of entries; and to
write to the non-volatile and protected portion of the memory the register with a plurality of entries.

In a practical embodiment, the privileged process is exclusively allocated to the non-volatile and protected portion of the memory such that no other process can access the non-volatile and protected portion of the memory. That is, the privileged process has exclusive access to the non-volatile and protected portion of the memory. The non-volatile and protected portion of the memory may be a page and/or a segment of the memory. Memory protection confers advantages in terms of inhibiting malicious processes from tampering with privileged information.

It is still a further object of the instant disclosure to provide any of the aforementioned mobile maintenance devices, wherein the mobile maintenance device comprises at least one second communication interface configured for bidirectional communication with another mobile maintenance device according to the instant disclosure, the processor being configured to:
receive from the other mobile maintenance device a request for whitelist data indicative of a register with a plurality of entries via the at least one second communication interface;
read from the memory and in response to the request a register with a plurality of entries;
produce whitelist data from the register read from the memory; and
send the whitelist data to the other mobile maintenance device via the at least one second communication interface.

Peer to peer communication confers advantages in terms of seamless communication and collaboration in amongst a cluster of mobile maintenance devices.

It is still a further object of the instant disclosure to provide any of the aforementioned mobile maintenance devices, wherein the processor is configured to:
encrypt the register read from the memory to produce encrypted whitelist data; and
send the encrypted whitelist data to the other mobile maintenance device via the at least one second communication interface.

It is still another object of the instant disclosure to provide a non-transitory, tangible computer readable medium having instructions executable by a processor of a mobile maintenance device that, when executed by the processor, cause the processor of the mobile maintenance device, the mobile maintenance device comprising at least one first communication interface and a memory, to perform:
receiving identity data indicative of an identity of an appliance from the at least one first communication interface;
reading from the memory a register with a plurality of entries;
producing a digital value as a function of, preferably as a direct function of, the received identity data, the function of the received identity data being selected from one of:
   an identity function; or
   a hash function;
   comparing the digital value to the plurality of entries of the register; and
   carrying out technical maintenance on the appliance if the digital value matches at least one entry of the plurality of entries of the register.

### Brief description of the drawings

Various features will become apparent to those skilled in the art from the following detailed description of the disclosed non-limiting embodiments. The drawings that accompany the detailed description can be briefly described as follows:
FIG 1 schematically depicts a mobile maintenance device, in particular a mobile computer, according to the instant disclosure.
FIG 2 is a schematic showing communication channels between a mobile maintenance device, in particular between a mobile computer, and an appliance and a remote server.
FIG 3 is a schematic showing communication channels between a mobile maintenance device, in particular between a mobile computer, and an appliance.
FIG 4 is a close-up detailed view of the first wireless communication interface and of the second wireless communication interface.
FIG 5 provides a close-up detailed view of a processor of a mobile maintenance device, in particular of a mobile computer.

### Detailed decription

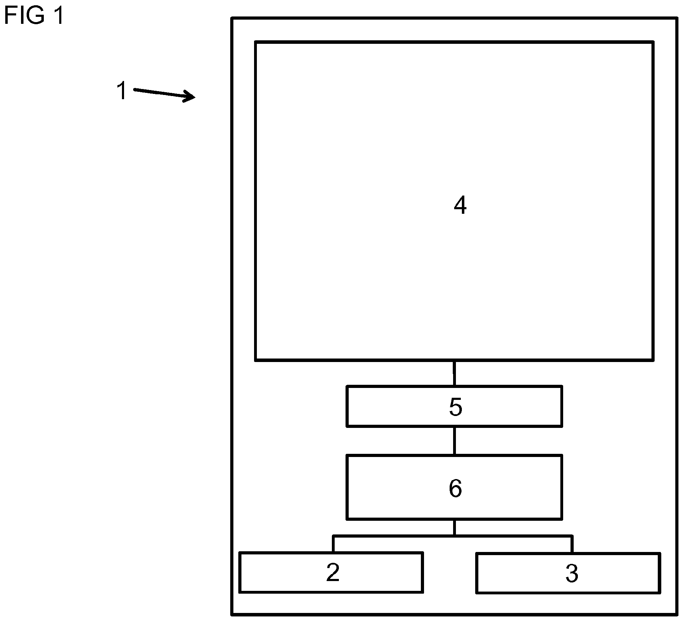

FIG 1 shows a mobile maintenance device 1. Mobile maintenance device 1 may, in an embodiment, be a mobile augmented reality device. It is also envisaged that mobile maintenance device 1 is a mobile device 1, in particular a mobile phone 1, a smart mobile phone 1, a tablet computer 1, a pair of virtual reality glasses 1 and/or a virtual reality headset 1 and/or a mobile handheld device 1.

Mobile maintenance device 1 comprises a user interface such as a touch-screen display 4. User interface 4 may, by way of non-limiting example, comprise a liquid crystal display and/or a display made up of organic light-emitting diodes, and/or electronic paper. Electronic paper in conjunction with a mobile maintenance device 1 or in conjunction with a mobile device 1 confers advantages in terms of reduced energy consumption. Electronic paper in conjunction with a mobile maintenance device 1 or in conjunction with a mobile device 1 also confers advantages in terms of improved battery life. User interface 4 connects to a driver unit 5 such as a graphics card 5. Graphics card 5 advantageously comprises a plurality of parallel graphics processors. User interface 4 is configured to visually annunciate a status of an appliance based on, preferably directly based on, a graphics signal received from the graphics driver unit 5. The skilled person selects a suitable communication bus and/or a suitable physical connection to communicatively couple graphics driver unit 5 and user interface 4.

User interface 4 can, by way of non-limiting example, comprise a monochrome display, a grayscale display, or a color screen with a suitable resolution. Suitable resolutions include, but are not limited to, 426 x 320 pixels, 470 x 320 pixels, 640 x 480 pixels, or 960 x 720 pixels etc.

Mobile maintenance device 1 also comprises a processor 6. Processor 6 may, by way of non-limiting example, comprise a microprocessor and/or a microcontroller. In an embodiment, processor 6 is based on, preferably is directly based on, a reduced instruction set architecture. In an alternate embodiment, processor 6 is based on, preferably is directly based on, a complex instruction set architecture. Processor 6 is communicatively coupled with, in particular is directly communicatively coupled with, graphics driver unit 5. The skilled person selects a suitable communication bus and/or a suitable communication bus protocol to communicatively couple processor 6 and graphics driver unit 5. According to an aspect, graphics driver unit 5 is an integral component of processor 6. That is, graphics driver unit 5 and processor 6 are arranged in the same chip, preferably on the same system on a chip (SoC).

A first communication interface 2 enables connection of mobile maintenance device 1 to an appliance. According to an aspect, first communication interface 2 is or comprises a camera, in particular a mobile phone camera. The camera advantageously provides functionality to take a picture of a quick response code that is attached to or secured relative to or printed on a housing of an appliance. The camera advantageously also provides functionality to take a picture of and/or to scan a barcode. In an alternate embodiment, the first communication interface 2 is or comprises a radio frequency identification transponder. The radio frequency identification transponder is operable to read a tag for radio frequency identification. According to an aspect, the tag for radio frequency identification is a passive tag. That is, the tag for radio frequency identification does not connect to a power supply. In yet another embodiment, the first communication interface 2 is or comprises a near field communication transponder. The near field communication transponder is operable to read a signal originating from another unit that provides near field communication. The near field communication transponder is, in particular, operable to read a signal originating from an appliance that provides near field communication.

In an embodiment, first communication interface 2 comprises a power-over-ethernet interface in accordance with IEEE 802.3af-2003, June 2003. Connection of mobile maintenance devices 1 to an appliance via a power-over-ethernet interface allows mobile maintenance devices 1 to draw power from the appliance. In so doing, mobile maintenance device 1 becomes more independent of power-outlets installed in a building.

First communication interface 2 is communicatively coupled with, in particular is directly communicatively coupled with, processor 6. The skilled person selects a suitable communication bus and/or a suitable communication bus protocol to communicatively couple first communication interface 2 and processor 6. According to an aspect, communication between first communication interface 2 and processor 6 is unidirectional as opposed to bidirectional. Processor 6 may only receive data from first communication interface 2. First communication interface 2 may not receive data from processor 6. Unidirectional communication confers advantages in terms of reduced complexity and in terms of lower cost. In an alternate embodiment, communication between first communication interface 2 and processor 6 is bidirectional.

A second communication interface 3 enables connection of mobile maintenance device 1 to a remote server. According to an aspect, second communication interface 3 is or comprises a wireless local area network unit and/or a Bluetooth® unit and/or a KNX® radio frequency unit, and/or an Enocean® unit and/or a Zigbee® unit. It is envisaged that second communication interface 3 provides functionality for encrypted communication between mobile maintenance device 1 and a remote server. It is further envisaged that second communication interface 3 is a wireless network adaptor and/or a wireless network card.

Second communication interface 3 is communicatively coupled with, in particular is directly communicatively coupled with, processor 6. The skilled person selects a suitable communication bus and/or a suitable communication bus protocol to communicatively couple second communication interface 3 and processor 6. Communication between second communication interface 3 and processor 6 is preferably bidirectional. Bidirectional communication enables mobile maintenance device 1 to send data to and to receive data from a remote server. Mobile maintenance device 1 may thus send a request to a remote server and obtain a response to its request.

Second communication interface 3 communicating over a wireless bus advantageously provides a radio frequency module such as a module capable of quaternary phase-shift keying. It is also envisaged that the radio frequency module improves on data transmission by limiting sizes of message blocks and/or by extra data redundancy. These functionalities may prove useful in environments wherein communication between second communication interface 3 and a remote server is hindered by obstacles such as thick concrete walls. These functionalities may also prove useful in environments wherein second communication interface 3 communicates with a remote server over long distances.

First communication interface 2 and second communication interface 3 are preferably separate entitites.

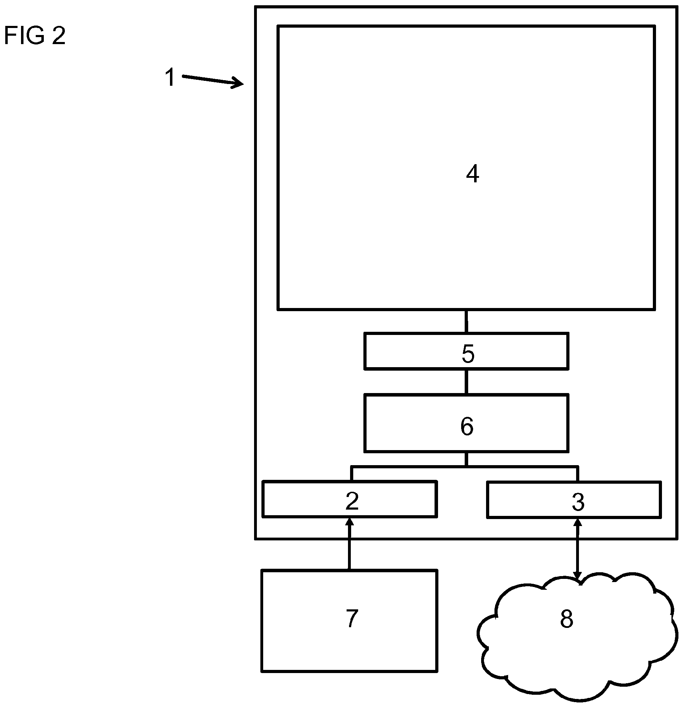

Now referring to FIG 2, a mobile maintenance device 1 is shown in communication with an appliance 7. Mobile maintenance device 1 also is in communication with a remote server 8. According to an aspect, remote server 8 is or comprises a cloud server.

First communication interface 2 advantageously handles communication with appliance 7. To that end, first communication interface 2 may provide a scanner and/or a camera. First communication interface 2 then uses the scanner and/or the camera to read a barcode and/or a quick response code. The barcode and/or the quick response can be mounted to or secured relative to or affixed to or printed on a housing of appliance 7. In an alternate embodiment, first communication interface 2 provides an infrared receiver. First communication interface 2 then reads an infrared signal originating from appliance 7. To that end, an infrared transmitter can be mounted to or secured relative to or affixed to a housing of appliance 7. In yet another embodiment, first communication interface 2 provides a receiver for radio frequency identification signals. First communication interface 2 then reads a radio frequency identification signal originating from appliance 7. To that end, a radio frequency identification tag can be mounted to or secured relative to or affixed to a housing of appliance 7. In still another embodiment, first communication interface 2 provides a receiver for near field communication. First communication interface 2 then reads a near field communication signal originating from appliance 7. To that end, a transponder for near field communication can be mounted to or secured relative to or affixed to a housing of appliance 7.

First communication interface 2 is thus communicatively coupled with, in particular is directly communicatively coupled with, an appliance 7. According to an aspect, communication between first communication interface 2 and appliance 7 is unidirectional as opposed to bidirectional. First communication interface 2 may only receive data and/or signals from appliance 7. First communication interface 2 may not send data and/or signals to appliance 7. Unidirectional communication confers advantages in terms of reduced complexity and in terms of lower cost. In an alternate embodiment, communication between first communication interface 2 and appliance 7 is bidirectional. The skilled person selects a suitable communication bus and/or a suitable communication bus protocol to establish bidirectional communication between first communication interface 2 and appliance 7. The skilled person may, by way of non-limiting example, rely on a message queuing telemetry transport (MQTT) protocol for such purposes.

Second communication interface 3 advantageously handles communication with remote server 8. To that end, second communication interface 3 may provide a radio frequency module. Second communication interface 3 reads radio frequency signals originating from remote server 8 using the radio frequency module. The radio frequency signals may, by way of non-limiting example, be signals originating from a wireless local area network and/or from a Bluetooth® network and/or from a KNX® radio frequency network, and/or from an Enocean® network and/or from a Zigbee® network. Second communication interface 3 ideally also transmits such radio frequency signals to remote server 8. It is envisaged that second communication interface 3 also comprises an aerial to transmit and to receive such signals.

According to an aspect, a web server runs on remote server 8. The web server may listen for connections on transmission control protocol / internet protocol port 80 or 443. The web server of appliance 7 may optionally decrypt and encrypt traffic. The web server may rely on a Diffie-Hellman key exchange for such purposes. Remote server 8 also provides a remote communication interface. Data are forwarded from the web server running on the remote server 8 to the remote communication interface of remote server 8. The remote communication interface modulates data originating from the web server to produce radio frequency signals. The radio frequency signals are then transmitted to mobile maintenance device 1 and received by second communication interface 3. It is envisaged that the remote communication interface also comprises an aerial to transmit and to receive such radio frequency signals.

Likewise, the remote communication interface demodulates radio frequency signals originating from mobile maintenance device 1 to produce data. These data are then forwarded to the web server of remote server 8.

Second communication interface 3 is thus communicatively coupled with, in particular is directly communicatively coupled with, remote server 8. According to an aspect, communication between second communication interface 3 and remote server 8 is bidirectional as opposed to unidirectional. The person with ordinary skill in the art selects a suitable communication bus and/or a suitable communication bus protocol to establish bidirectional communication between second communication interface 3 and the web server of remote server 8. The skilled person may, in particular, select a connection-oriented communication bus protocol. According to an alternate aspect, the skilled person selects a connectionless communication bus protocol.

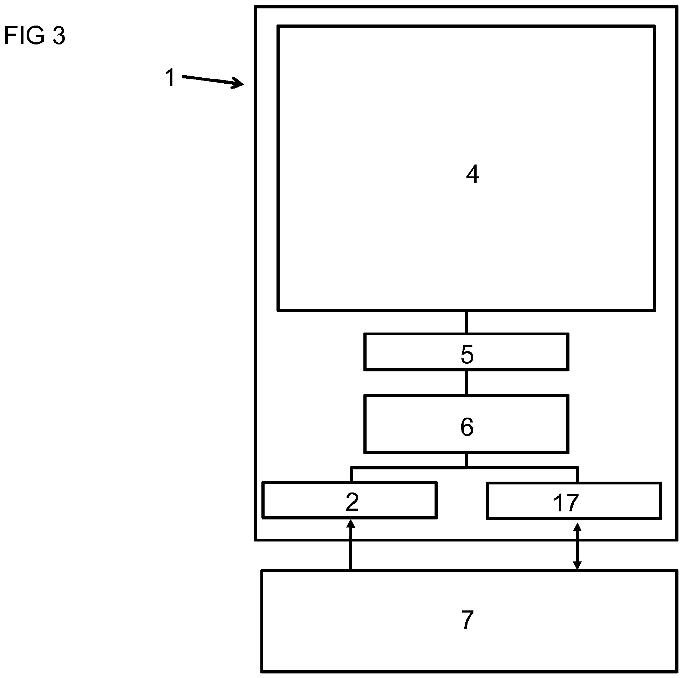

Now turning to FIG 3, a mobile maintenance device 1 is shown in communication with an appliance 7. The embodiment of FIG 3 assumes a first communication channel between first communication interface 2 and appliance 7. Communication between first communication interface 2 and appliance 7 operates as described in the notes on FIG 2. The embodiment of FIG 3 also assumes a second communication channel between a maintenance interface 17 and appliance 7.

Maintenance interface 17 advantageously enables bidirectional communication with appliance 7. To that end, maintenance interface 17 may provide a radio frequency module. Maintenance interface 17 reads radio frequency signals originating from appliance 7. The radio frequency signals may, by way of non-limiting example, be signals originating from a wireless local area network and/or from a Bluetooth® network and/or from a KNX® radio frequency network, and/or from an Enocean® network and/or from a Zigbee® network. Maintenance interface 17 ideally also transmits such radio frequency signals to appliance 7. It is envisaged that maintenance interface 17 also comprises an aerial to transmit and to receive such signals.

In an embodiment, maintenance interface 17 comprises a power-over-ethernet interface in accordance with IEEE 802.3af-2003, June 2003. Connection of mobile maintenance devices 1 to an appliance via a power-over-ethernet interface allows mobile maintenance device 1 to draw power from the appliance 7. In so doing, mobile maintenance device 1 becomes more independent of power-outlets installed in a building.

According to an aspect, a web server runs on appliance 7. The web server may listen for connections on transmission control protocol / internet protocol port 80 or 443. The web server of appliance 7 may optionally decrypt and encrypt traffic. The web server may rely on a Diffie-Hellman key exchange for such purposes. Appliance 7 also provides a remote communication interface. Data are forwarded from the web server of appliance 7 to the remote communication interface of appliance 7. The remote communication interface modulates data originating from the web server of appliance 7 to produce radio frequency signals. The radio frequency signals are then transmitted to mobile maintenance device 1 and received by maintenance interface 17. It is envisaged that the remote communication interface also comprises an aerial to transmit and to receive such radio frequency signals.

Likewise, the remote communication interface of appliance 7 demodulates radio frequency signals originating from mobile maintenance device 1 to produce data. These data are then forwarded to the web server of appliance 7.

Maintenance interface 17 is thus communicatively coupled with, in particular is directly communicatively coupled with, appliance 7. According to an aspect, communication using the second communication channel between maintenance interface 17 and appliance 7 is bidirectional as opposed to unidirectional. The person with ordinary skill in the art selects a suitable communication bus and/or a suitable communication bus protocol to establish bidirectional communication between maintenance interface 17 and (the web server of) appliance 7. The skilled person may, in particular, select a connection-oriented communication bus protocol. According to an alternate aspect, the skilled person selects a connectionless communication bus protocol. The skilled person may, by way of non-limiting example, rely on a message queuing telemetry transport (MQTT) protocol for communication between maintenance interface 7 and appliance 7.

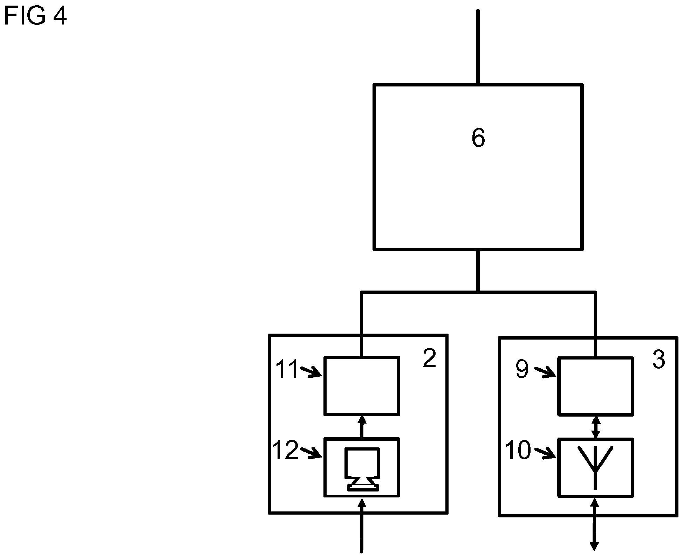

FIG 4 provides additional details of first 2 and second 3 communication interfaces. First communication interface 2 as shown on FIG 4 comprises a camera or a scanner 12. Camera or scanner 12 may, by way of non-limiting example, be a camera or a scanner recording visible light with wavelengths between 400 nm and 800 nm, especially between 500 nm and 800 nm, in a particular embodiment between 600 nm and 800 nm. A narrow range of wavelengths makes the arrangement less susceptible to interference. Camera or scanner 12 may, by way of another non-limiting example, be a camera or a scanner recording infrared light with wavelengths larger than 800 nm, especially larger than 950 nm, in a particular embodiment larger than 1200 nm. Use of infrared light proves useful when reading quick response codes or bar codes that are invisible to the human observer since they are printed in the infrared regime.

Camera or scanner 12 communicatively couples to an image processor 11. Image processor 11 communicatively couples to processor 6. According to an aspect, image processor 11 is operable to process barcode signals. Image processor 11 thus receives signals from camera or scanner 12. Image processor 11 extracts barcode data from such signals. Image processor 11 eventually submits data indicative of a barcode and/or comprising barcode data to processor 6. It is envisaged that image processor 11 is an integral component of processor 6. That is, image processor 11 and processor 6 are arranged on the same chip. Ideally, image processor 11 and processor 6 are arranged on the same system on a chip (SoC).

According to an alternate aspect, image processor 11 is operable to process quick response code signals. Image processor 11 thus receives signals from camera or scanner 12. Image processor 11 extracts quick response code data from such signals. Image processor 11 eventually submits data indicative of a quick response code and/or comprising quick response code data to processor 6. It is envisaged that image processor 11 is an integral component of processor 6. That is, image processor 11 and processor 6 are arranged on the same chip. Ideally, image processor 11 and processor 6 are arranged on the same system on a chip (SoC).

Second communication interface 3 as shown on FIG 4 comprises an aerial 10. Aerial 10 may, by way of non-limiting example, be an aerial for frequencies between 470 MHz and 862 MHz, for frequencies between 2.4 GHz and 2.5 GHz, and/or for frequencies between 5.0 GHz and 5.9 GHz. It is envisaged that aerial 10 is a directional antenna. Low frequencies offer benefits in terms of long range, whereas high frequencies offer benefits in terms of reduced interference. Directional antennae offer benefits in terms of improved signal to noise.

Aerial 10 communicatively couples to a demodulator/modulator unit 9. Demodulator/modulator unit 9 communicatively couples to processor 6. According to an aspect, demodulator/modulator unit 9 is operable to process amplitude-modulated signals and/or frequency-modulated signals. Demodulator/modulator unit 9 thus receives signals from aerial 10. Demodulator/modulator unit 9 extracts data and/or data packets from such signals. Demodulator/modulator unit 9 eventually submits data and/or data packets to processor 6. It is envisaged that demodulator/modulator unit 9 is an integral component of processor 6. That is, demodulator/modulator unit 9 and processor 6 are arranged on the same chip. Ideally, demodulator/modulator unit 9 and processor 6 are arranged on the same system on a chip (SoC) .

In an embodiment, second communication interface 3 comprises a power-over-ethernet interface in accordance with IEEE 802.3af-2003, June 2003. Connection of mobile maintenance devices 1 to an appliance via a power-over-ethernet interface allows mobile maintenance device 1 to draw power from the appliance 7. In so doing, mobile maintenance device 1 becomes more independent of power-outlets installed in a building.

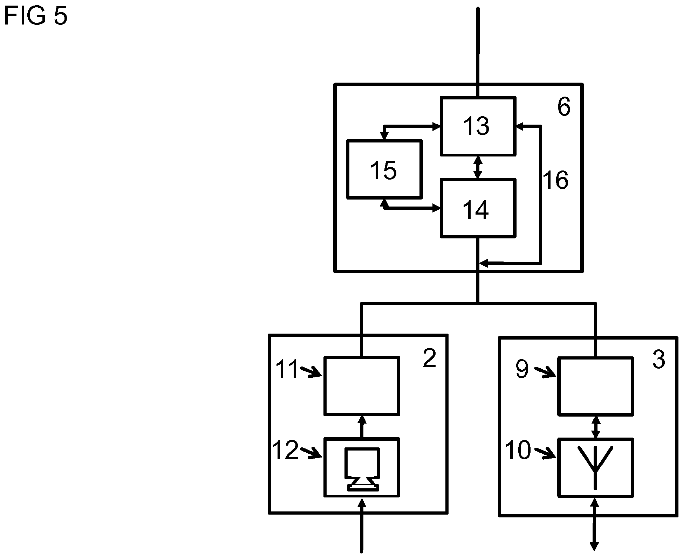

FIG 5 provides additional details of processor 6. Processor 6 as shown on FIG 5 comprises an application-specific integrated circuit 14, a memory 15, and a microprocessor/microcontroller 13. According to an aspect, memory 15 is a non-volatile memory.

Application-specific integrated circuit 14 is communicatively coupled with, in particular is directly communicatively coupled with, demodulator/modulator 9. Application-specific integrated circuit 14 is also communicatively coupled with, in particular is directly communicatively coupled with, memory 15. Application-specific integrated circuit 14 may thus read data from and/or send data to demodulator/modulator 9. In an embodiment, application-specific integrated circuit 14 functions to decipher data read from demodulator/modulator 9. To that end, application-specific integrated circuit 14 may employ a symmetric or an asymmetric key. The symmetric key may, in particular, be a key negotiated via a Diffie-Hellman key exchange. The asymmetric key may, in particular, be part of a public/private key pair. It is envisaged that application-specific integrated circuit 14 reads a key such as an asymmetric key from memory 15 and employs that key to decipher data read from demodulator/modulator unit 9.

In an embodiment, application-specific integrated circuit 14 can also function to encrypt data to be sent to demodulator/modulator 9. To that end, application-specific integrated circuit 14 may employ a symmetric or an asymmetric key. The symmetric key may, in particular, be a key negotiated via a Diffie-Hellman key exchange. The asymmetric key may, in particular, be part of a public/private key pair. It is envisaged that application-specific integrated circuit 14 reads a key such as an asymmetric key from memory 15 and employs that key to encrypt data to be sent to demodulator/modulator unit 9.

Dedicated-purpose controllers such as application-specific integrated circuits are generally more effective at tasks such as encryption or decryption as compared to general purpose controllers. It is envisaged that application-specific integrated circuit 14 is an integral component of processor 6. That is, application-specific integrated circuit 14 and microcontroller/microprocessor 13 are arranged on the same chip. Ideally, application-specific integrated circuit 14 and microcontroller/microprocessor 13 are arranged on the same system on a chip (SoC).

FIG 5 also shows an optional bypass link 16. Bypass link 16 enables direct communication between microcontroller/microprocessor 13 and demodulator/modulator unit 9. Bypass link 16 proves useful where no encoding or decoding is required. Bypass link 16 also proves useful where microcontroller/microprocessor 13 can directly process data originating from demodulator/modulator unit 9.

Microcontroller/microprocessor 13 is advantageously employed to carry out tasks other than decoding/encoding or processing of graphics signals. It is envisaged that microcontroller/microprocessor 13 runs an operating system. The operating system may, for instance, be an Android® operating system, a Windows® operating system, or a Linux® operating system such as Meego®. The operating system may be a system specifically tailored to mobile maintenance devices 1 and/or to mobile devices 1. The operating system may also be general-purpose.

In other words, the instant disclosure teaches any of the aforementioned mobile maintenance devices 1, wherein the first communication interface 2 is configured to record an infrared light signal, wherein the infrared light signal has an optical wavelength exceeding 800 nm.

It is envisaged that the processor 6 comprises an application-specific integrated circuit 14, the processor 6 being configured to:
decode received data to produce decoded data using its application-specific integrated circuit 14.

The instant disclosure further teaches any of the aforementioned mobile maintenance devices 1, wherein the mobile maintenance device 1 comprises a non-volatile memory 15 readable by the processor 6, the non-volatile memory 15 storing a cryptographic key, the processor 6 being configured to:
read the cryptographic key from the non-volatile memory 15; and
decode the received data using the cryptographic key to produce decoded data.

The instant disclosure further teaches any of the aforementioned mobile maintenance devices 1, wherein the second communication interface 3 is configured to:
receive data from the processor 6;
modulate the received data to produce a signal; and send the signal to the remote server 8.

It is envisaged that the second communication interface 3 comprises an aerial 10 and a demodulator/modulator unit 9. The second communication interface 3 is configured to:
modulate the received data to produce a signal using its demodulator/modulator unit 9; and
send the signal to the remote server 8 using its aerial 10.

The instant disclosure further teaches any of the aforementioned mobile maintenance devices 1, wherein the processor 6 is configured to:
send status information data to the graphics driver unit 5; and
wherein the graphics driver unit 5 is configured to:
   receive the status information data from the processor 6;
   produce a graphics signal from the received status information data 6; and
   send the graphics signal to the display 4;
   wherein the display 4 is configured to:
      receive the graphics signal from the graphics driver unit 5; and
      display status information as a function, preferably as a direct function of, of the received graphics signal.

Direct functions exclusively depend on the arguments specified. Direct functions may contain parameters that are not treated as arguments.

The instant disclosure further teaches any of the aforementioned mobile maintenance devices 1 or non-transitory computer readable media, wherein the processor 6 is configured to or is caused to perform:
receive identity data indicative of the identity of the appliance 7 from the first communication interface 2;
decode the received identity data to produce decoded identity data; and
produce request data from the decoded identity data.

The instant disclosure also teaches any of the aforementioned mobile maintenance devices 1, wherein the mobile maintenance device 1 comprises a non-volatile memory 15 readable by the processor 6, the non-volatile memory 15 storing a cryptographic key, the processor 6 being configured to:
read the cryptographic key from the non-volatile memory 15; and
decode the received identity data using the cryptographic key to produce decoded identity data.

The first communication interface 2 is advantageously different from the second communication interface 3.

Any steps of a method according to the present disclosure may be embodied in hardware, in a software module executed by a processor, in a software module executed by a processor inside a container using operating-system-level virtualization, in a cloud computing arrangement, or in a combination thereof. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference numerals

1 mobile maintenance device
2 first communication interface
3 second communication interface
4 user interface
5 driver unit, in particular graphics card
6 processor, in particular microprocessor and/or microcontroller
7 appliance
8 remote server
9 demodulator/modulator unit
10 receiving unit, in particular antenna
11 demodulator/modulator unit, in particular image processor
12 receiving unit, camera
13 microprocessor and/or microcontroller
14 application-specific integrated circuit
15 memory, in particular non-volatile memory
16 bypass link
17 maintenance interface

## Claims

1. A mobile maintenance device (1) comprising:
at least one first communication interface (2) configured to receive from an appliance (7) identity data indicative of an identity of the appliance (7);
a memory (15);
a processor (6) communicatively coupled to the at least one first communication interface (2) and to the memory (15), the processor (6) being configured to:
receive identity data indicative of the identity of the appliance (7) from the at least one first communication interface (2);
the processor (6) is configured to:
read from the memory (15) a register with a plurality of entries;
produce a digital value as a function of the received identity data, the function of the received identity data being selected from one of:
an identity function; or
a hash function;
compare the digital value to the plurality of entries of the register;
wherein the mobile maintenance device (1) comprises at least one second communication interface (3) configured for bidirectional communication with a remote server (8); the processor (6) being communicatively coupled to the at least one second communication interface (3), the processor (6) being configured to:
receive whitelist data indicative of a register with a plurality of entries from the at least one second communication interface (3);
produce the register with a plurality of entries from the received whitelist data; and
write the register with a plurality of entries to the memory (15)
and
carry out technical maintenance on the appliance (7) if the digital value matches at least one entry of the plurality of entries of the register.

2. The mobile maintenance device (1) according to claim 1, wherein the memory (15) is a non-volatile memory (15).

3. The mobile maintenance device (1) according to any of the claims 1 to 2, wherein the at least one first communication interface (2) is selected from one of:
a camera;
a quick response code scanner;
a barcode scanner;
a wireless network interface;
a power-over-ethernet interface;
a near field communication reader;
a wired network interface; or
a smart card reader.

4. The mobile maintenance device (1) according to any of the claims 1 to 3, wherein the identity data is selected from one of:
a media access control address;
a serial number; or
a cryptographic key.

5. The mobile maintenance device (1) according to any of the claims 1 to 4, wherein at least one entry of the plurality of entries of the register is associated with a privileged appliance, the privileged appliance being an appliance configured to be technically maintained by the mobile maintenance device (1).

6. The mobile maintenance device (1) according to any of the claims 1 to 5, wherein technical maintenance on the appliance (7) is selected from at least one of:
an operational check of the appliance (7);
setting a technical parameter of the appliance (7);
a functional check of the appliance (7); or
a firmware update of the appliance (7).

7. The mobile maintenance device (1) according to any of the claims 1 to 6, wherein the mobile maintenance device (1) comprises at least one maintenance interface (17) configured to send an instruction to the appliance (7); the processor (6) being communicatively coupled to the at least one maintenance interface (17), the processor (6) being configured to:
send via the at least one maintenance interface (17) an instruction to carry out technical maintenance on the appliance (7) if the digital value matches at least one entry of the plurality of entries of the register, the instruction to carry out technical maintenance being selected from one of:
an instruction to perform an operational check of the appliance (7);
an instruction to set a technical parameter of the appliance (7);
an instruction to perform a functional check of the appliance (7); or
an instruction to update the firmware of the appliance (7).

8. The mobile maintenance device (1) according to any of the claims 1 to 7, wherein the mobile maintenance device (1) comprises at least one user interface (4) configured to receive inputs from a user of the mobile maintenance device (1); the processor (6) being communicatively coupled to the at least one user interface (4), the processor (6) being configured to:
receive credentials data indicative of user credentials from the at least one user interface (4); and
produce the digital value as a function of the received identity data and of the received credentials data, the function being a hash function.

9. The mobile maintenance device (1) according to any of the claims 1 or 8, wherein the memory (15) comprises a non-volatile and protected portion, the processor (6) being configured to:
carry out a privileged process such that the privileged process is exclusively allowed to
read from the non-volatile and protected portion of the memory (15) the register with a plurality of entries; and to
write to the non-volatile and protected portion of the memory (15) the register with a plurality of entries.

10. The mobile maintenance device (1) according to any of the claims 1 to 9, wherein the mobile maintenance device (1) comprises at least one second communication interface (3) configured for bidirectional communication with another mobile maintenance device (1) according to any of the claims 1 to 12, the processor (6) being configured to:
receive from the other mobile maintenance device (1) a request for whitelist data indicative of a register with a plurality of entries via the at least one second communication interface (3);
read from the memory (15) and in response to the request a register with a plurality of entries;
produce whitelist data from the register read from the memory (15); and
send the whitelist data to the other mobile maintenance device (1) via the at least one second communication interface (3).

11. The mobile maintenance device (1) according to claim 10, wherein the processor (6) is configured to:
encrypt the register read from the memory (15) to produce encrypted whitelist data; and
send the encrypted whitelist data to the other mobile maintenance device (1) via the at least one second communication interface (3).

12. A non-transitory, tangible computer readable medium having instructions executable by a processor (6) of a mobile maintenance device (1) that, when executed by the processor (6), cause the processor (6) of the mobile maintenance device (1), the mobile maintenance device (1) comprising at least one first communication interface (2) and a memory (15), to perform:
receiving identity data indicative of an identity of an appliance (7) from the at least one first communication interface (2);
the instructions cause the processor (6) of the mobile maintenance device (1), to perform:
reading from the memory (15) a register with a plurality of entries;
producing a digital value as a function of the received identity data, the function of the received identity data being selected from one of:
an identity function; or
a hash function;
comparing the digital value to the plurality of entries of the register;
wherein the mobile maintenance device (1) comprises at least one second communication interface (3) configured for bidirectional communication with a remote server (8); the processor (6) being communicatively coupled to the at least one second communication interface (3), the processor (6) being configured to:
receive whitelist data indicative of a register with a plurality of entries from the at least one second communication interface (3);
produce the register with a plurality of entries from the received whitelist data; and
write the register with a plurality of entries to the memory (15) and
carry out technical maintenance on the appliance (7) if the digital value matches at least one entry of the plurality of entries of the register.

## Patentansprüche

1. Mobile Wartungsvorrichtung (1), umfassend:
mindestens eine erste Kommunikationsschnittstelle (2), die zum Empfangen von Identitätsdaten, die eine Identität des Geräts (7) angeben, von einem Gerät (7) ausgelegt ist;
einen Speicher (15);
einen Prozessor (6), der kommunikativ mit der mindestens einen ersten Kommunikationsschnittstelle (2) und mit dem Speicher (15) gekoppelt ist, wobei der Prozessor (6) ausgelegt ist zum:
Empfangen von Identitätsdaten, die die Identität des Geräts (7) angeben, von der mindestens einen ersten Kommunikationsschnittstelle (2);
wobei der Prozessor (6) ausgelegt ist zum:
Lesen eines Registers mit einer Mehrzahl von Einträgen aus dem Speicher (15);
Erzeugen eines digitalen Werts als eine Funktion der empfangenen Identitätsdaten, wobei die Funktion der empfangenen Identitätsdaten ausgewählt ist aus einer von:
einer Identitätsfunktion; oder
einer Hash-Funktion;
Vergleichen des digitalen Werts mit der Mehrzahl von Einträgen des Registers;
wobei die mobile Wartungsvorrichtung (1) mindestens eine zweite Kommunikationsschnittstelle (3) umfasst, die für bidirektionale Kommunikation mit einem Fernserver (8) ausgelegt ist; wobei der Prozessor (6) kommunikativ mit der mindestens einen zweiten Kommunikationsschnittstelle (3) gekoppelt ist, wobei der Prozessor (6) ausgelegt ist zum:
Empfangen von Daten einer Positivliste, die ein Register mit einer Mehrzahl von Einträgen angeben, von der mindestens einen zweiten Kommunikationsschnittstelle (3);
Erzeugen des Registers mit einer Mehrzahl von Einträgen aus den empfangenen Daten der Positivliste; und
Schreiben des Registers mit einer Mehrzahl von Einträgen in den Speicher (15);
und
Ausführen von technischer Wartung an dem Gerät (7), wenn der digitale Wert zu mindestens einem Eintrag der Mehrzahl von Einträgen des Registers passt.

2. Die mobile Wartungsvorrichtung (1) nach Anspruch 1, wobei der Speicher (15) ein nichtflüchtiger Speicher (15) ist.

3. Die mobile Wartungsvorrichtung (1) nach einem der Ansprüche 1 bis 2, wobei die mindestens eine erste Kommunikationsschnittstelle (2) ausgewählt ist aus einem von:
einer Kamera;
einem Quick Response-Code-Scanner;
einem Strichcode-Scanner;
einer drahtlosen Netzwerkschnittstelle;
einer Power-over-Ethernet-Schnittstelle;
einer Leseeinrichtung für Nahfeldkommunikation;
einer drahtgebundenen Netzwerkschnittstelle; oder
einer Chipkartenleseeinrichtung.

4. Die mobile Wartungsvorrichtung (1) nach einem der Ansprüche 1 bis 3, wobei die Identitätsdaten ausgewählt sind aus einem von:
einer Medienzugriffssteuerungsadresse;
einer Seriennummer; oder
einem kryptographischen Schlüssel.

5. Die mobile Wartungsvorrichtung (1) nach einem der Ansprüche 1 bis 4, wobei mindestens ein Eintrag der Mehrzahl von Einträgen des Registers einem privilegierten Gerät zugeordnet ist, wobei das privilegierte Gerät ein Gerät ist, das dazu ausgelegt ist, technisch von der mobilen Wartungsvorrichtung (1) gewartet zu werden.

6. Die mobile Wartungsvorrichtung (1) nach einem der Ansprüche 1 bis 5, wobei die technische Wartung an dem Gerät (7) ausgewählt ist aus mindestens einem von:
einer Betriebsprüfung des Geräts (7);
Einstellen eines technischen Parameters des Geräts (7);
einer Funktionsprüfung des Geräts (7); oder
einer Aktualisierung der Firmware des Geräts (7).

7. Die mobile Wartungsvorrichtung (1) nach einem der Ansprüche 1 bis 6, wobei die mobile Wartungsvorrichtung (1) mindestens eine Wartungsschnittstelle (17) umfasst, die ausgelegt ist zum Schicken eines Befehls an das Gerät (7); wobei der Prozessor (6) kommunikativ mit der mindestens einen Wartungsschnittstelle (17) gekoppelt ist, wobei der Prozessor (6) ausgelegt ist zum:
Schicken eines Befehls zum Ausführen von technischer Wartung an dem Gerät (7) über die mindestens eine Wartungsschnittstelle (17), wenn der digitale Wert zu mindestens einem Eintrag der Mehrzahl von Einträgen des Registers passt, wobei der Befehl zum Ausführen von technischer Wartung ausgewählt ist aus einem von:
einem Befehl zum Ausführen einer Betriebsprüfung des Geräts (7);
einem Befehl zum Einstellen eines technischen Parameters des Geräts (7);
einem Befehl zum Ausführen einer Funktionsprüfung des Geräts (7); oder
einem Befehl zur Aktualisierung der Firmware des Geräts (7).

8. Die mobile Wartungsvorrichtung (1) nach einem der Ansprüche 1 bis 7, wobei die mobile Wartungsvorrichtung (1) mindestens eine Benutzerschnittstelle (4) umfasst, die zum Empfangen von Eingaben von einem Benutzer der mobilen Wartungsvorrichtung (1) ausgelegt ist; wobei der Prozessor (6) kommunikativ mit der mindestens einen Benutzerschnittstelle (4) gekoppelt ist, wobei der Prozessor (6) ausgelegt ist zum:
Empfangen von Zugangsdaten, die Benutzerzugangsinformation angeben, von der mindestens einen Benutzerschnittstelle (4); und
Erzeugen des digitalen Werts als eine Funktion der empfangenen Identitätsdaten und der empfangenen Zugangsdaten, wobei die Funktion eine Hash-Funktion ist.

9. Die mobile Wartungsvorrichtung (1) nach einem der Ansprüche 1 oder 8, wobei der Speicher (15) einen nichtflüchtigen und geschützten Abschnitt umfasst, wobei der Prozessor (6) ausgelegt ist zum:
Ausführen eines privilegierten Prozesses derart, dass dem privilegierten Prozess ausschließlich erlaubt ist das:
Lesen des Registers mit einer Mehrzahl von Einträgen aus dem nichtflüchtigen und geschützten Abschnitt des Speichers (15); und
Schreiben des Registers mit einer Mehrzahl von Einträgen in den nichtflüchtigen und geschützten Abschnitt des Speichers (15).

10. Die mobile Wartungsvorrichtung (1) nach einem der Ansprüche 1 bis 9, wobei die mobile Wartungsvorrichtung (1) mindestens eine zweite Kommunikationsschnittstelle (3) umfasst, die für bidirektionale Kommunikation mit einer anderen mobilen Wartungsvorrichtung (1) nach einem der Ansprüche 1 bis 12 ausgelegt ist, wobei der Prozessor (6) ausgelegt ist zum:
Empfangen einer Anfrage nach Daten einer Positivliste, die ein Register mit einer Mehrzahl von Einträgen angeben, von der anderen mobilen Wartungsvorrichtung (1) über die mindestens eine zweite Kommunikationsschnittstelle (3);
Lesen eines Registers mit einer Mehrzahl von Einträgen aus dem Speicher (15) und als Antwort auf die Anfrage;
Erzeugen von Daten der Positivliste aus dem aus dem Speicher (15) gelesenen Register; und
Schicken der Daten der Positivliste an die andere mobile Wartungsvorrichtung (1) über die mindestens eine zweite Kommunikationsschnittstelle (3).

11. Die mobile Wartungsvorrichtung (1) nach Anspruch 10, wobei der Prozessor (6) ausgelegt ist zum:
Verschlüsseln des aus dem Speicher (15) gelesenen Registers, um verschlüsselte Daten einer Positivliste zu erzeugen; und
Schicken der verschlüsselten Daten der Positivliste an die andere mobile Wartungsvorrichtung (1) über die mindestens eine zweite Kommunikationsschnittstelle (3).

12. Nicht-flüchtiges, materielles computerlesbares Medium mit Befehlen, die von einem Prozessor (6) einer mobilen Wartungsvorrichtung (1) ausführbar sind und die, wenn sie von dem Prozessor (6) ausgeführt werden, den Prozessor (6) der mobilen Wartungsvorrichtung (1) - wobei die mobile Wartungsvorrichtung (1) mindestens eine erste Kommunikationsschnittstelle (2) und einen Speicher (15) umfasst - dazu veranlassen, auszuführen:
Empfangen von Identitätsdaten, die eine Identität eines Geräts (7) angeben, von der mindestens einen ersten Kommunikationsschnittstelle (2);
wobei die Befehle
den Prozessor (6) der mobilen Wartungsvorrichtung (1) dazu veranlassen, auszuführen:
Lesen eines Registers mit einer Mehrzahl von Einträgen aus dem Speicher (15);
Erzeugen eines digitalen Wertes als eine Funktion der empfangenen Identitätsdaten, wobei die Funktion der empfangenen Identitätsdaten ausgewählt ist aus einer von:
einer Identitätsfunktion; oder
einer Hash-Funktion;
Vergleichen des digitalen Werts mit der Mehrzahl von Einträgen des Registers;
wobei die mobile Wartungsvorrichtung (1) mindestens eine zweite Kommunikationsschnittstelle (3) umfasst, die für bidirektionale Kommunikation mit einem Fernserver (8) ausgelegt ist; wobei der Prozessor (6) kommunikativ mit der mindestens einen zweiten Kommunikationsschnittstelle (3) gekoppelt ist, wobei der Prozessor (6) ausgelegt ist zum:
Empfangen von Daten einer Positivliste, die ein Register mit einer Mehrzahl von Einträgen angeben, von der mindestens einen zweiten Kommunikationsschnittstelle (3);
Erzeugen des Registers mit einer Mehrzahl von Einträgen aus den empfangenen Daten der Positivliste; und
Schreiben des Registers mit einer Mehrzahl von Einträgen in den Speicher (15); und
Ausführen von technischer Wartung an dem Gerät (7), wenn der digitale Wert zu mindestens einem Eintrag aus der Mehrzahl der Registereinträge passt.

## Revendications

1. Dispositif de maintenance mobile (1) comprenant :
au moins une première interface de communication (2) configurée pour recevoir à partir d'un appareil (7), des données d'identité indiquant une identité de l'appareil (7) ;
une mémoire (15) ;
un processeur (6) couplé en communication à l'au moins une première interface de communication (2) et à la mémoire (15), le processeur (6) étant configuré pour :
recevoir des données d'identité indiquant l'identité de l'appareil (7) à partir de l'au moins une première interface de communication (2) ;
le processeur (6) est configuré pour :
lire, dans la mémoire (15), un registre avec une pluralité d'entrées ;
produire une valeur numérique comme étant une fonction des données d'identité reçues, la fonction des données d'identité reçues étant choisie parmi l'une de :
une fonction d'identité ; ou
une fonction de hachage ;
comparer la valeur numérique à la pluralité d'entrées du registre ;
dans lequel le dispositif de maintenance mobile (1) comprend au moins une deuxième interface de communication (3) configurée pour une communication bidirectionnelle avec un serveur distant (8) ; le processeur (6) étant couplé en communication à l'au moins une deuxième interface de communication (3), le processeur (6) étant configuré pour :
recevoir des données de liste blanche indiquant un registre avec une pluralité d'entrées à partir de l'au moins une deuxième interface de communication (3) ;
produire le registre avec une pluralité d'entrées à partir des données de liste blanche reçues ; et
écrire le registre avec une pluralité d'entrées dans la mémoire (15), et
effectuer une maintenance technique sur l'appareil (7) si la valeur numérique correspond à au moins une entrée de la pluralité d'entrées du registre.

2. Le dispositif de maintenance mobile (1) selon la revendication 1, dans lequel la mémoire (15) est une mémoire non volatile (15).

3. Le dispositif de maintenance mobile (1) selon l'une des revendications 1 à 2, dans lequel l'au moins une première interface de communication (2) est choisie parmi l'un(e) de :
une caméra ;
un lecteur de codes à réponse rapide ;
un lecteur de codes barres ;
une interface de réseau sans fil ;
une interface d'alimentation électrique par câble Ethernet ;
un lecteur de communication en champ proche ;
une interface de réseau câblé ; ou
un lecteur de cartes à puce.

4. Le dispositif de maintenance mobile (1) selon l'une des revendications 1 à 3, dans lequel les données d'identité sont choisies parmi l'un(e) de :
une adresse de commande d'accès au support ;
un numéro de série ; ou
une clé cryptographique.

5. Le dispositif de maintenance mobile (1) selon l'une des revendications 1 à 4, dans lequel au moins une entrée de la pluralité d'entrées du registre est associée à un appareil privilégié, l'appareil privilégié étant un appareil configuré pour être techniquement maintenu par le dispositif de maintenance mobile (1).

6. Le dispositif de maintenance mobile (1) selon l'une des revendications 1 à 5, dans lequel la maintenance technique sur l'appareil (7) est choisie parmi au moins l'un(e) de :
une vérification opérationnelle de l'appareil (7) ;
un réglage d'un paramètre technique de l'appareil (7) ;
une vérification fonctionnelle de l'appareil (7) ; ou
une mise à jour de micrologiciel de l'appareil (7).

7. Le dispositif de maintenance mobile (1) selon l'une des revendications 1 à 6, dans lequel le dispositif de maintenance mobile (1) comprend au moins une interface de maintenance (17) configurée pour envoyer une instruction à l'appareil (7) ; le processeur (6) étant couplé en communication à l'au moins une interface de maintenance (17), le processeur (6) étant configuré pour :
envoyer, via l'au moins une interface de maintenance (17), une instruction pour effectuer une maintenance technique sur l'appareil (7) si la valeur numérique correspond à au moins une entrée de la pluralité d'entrées du registre, l'instruction pour effectuer la maintenance technique étant choisie parmi l'une de :
une instruction pour effectuer une vérification opérationnelle de l'appareil (7) ;
une instruction pour régler un paramètre technique de l'appareil (7) ;
une instruction pour effectuer une vérification fonctionnelle de l'appareil (7) ; ou
une instruction pour mettre à jour le micrologiciel de l'appareil (7).

8. Le dispositif de maintenance mobile (1) selon l'une des revendications 1 à 7, dans lequel le dispositif de maintenance mobile (1) comprend au moins une interface utilisateur (4) configurée pour recevoir des entrées d'un utilisateur du dispositif de maintenance mobile (1) ; le processeur (6) étant couplé en communication à l'au moins une interface utilisateur (4), le processeur (6) étant configuré pour :
recevoir des données de justificatifs d'identité indiquant des justificatifs d'identité d'utilisateur à partir de l'au moins une interface utilisateur (4) ; et
produire la valeur numérique comme étant une fonction des données d'identité reçues et des données de justificatifs d'identité reçues, la fonction étant une fonction de hachage.

9. Le dispositif de maintenance mobile (1) selon l'une des revendications 1 ou 8, dans lequel la mémoire (15) comprend une partie non volatile et protégée, le processeur (6) étant configuré pour :
effectuer un processus privilégié de sorte que le processus privilégié soit exclusivement autorisé à
lire, dans la partie non volatile et protégée de la mémoire (15), le registre avec une pluralité d'entrées ; et à
écrire, dans la partie non volatile et protégée de la mémoire (15), le registre avec une pluralité d'entrées.

10. Dispositif de maintenance mobile (1) selon l'une des revendications 1 à 9, dans lequel le dispositif de maintenance mobile (1) comprend au moins une deuxième interface de communication (3) configurée pour une communication bidirectionnelle avec un autre dispositif de maintenance mobile (1) selon l'une des revendications 1 à 12, le processeur (6) étant configuré pour :
recevoir à partir de l'autre dispositif de maintenance mobile (1) une demande de données de liste blanche indiquant un registre avec une pluralité d'entrées via l'au moins une deuxième interface de communication (3) ;
lire dans la mémoire (15) et en réponse à la demande un registre avec une pluralité d'entrées ;
produire des données de liste blanche à partir du registre lu dans la mémoire (15) ; et
envoyer les données de liste blanche à l'autre dispositif de maintenance mobile (1) via l'au moins une deuxième interface de communication (3).

11. Le dispositif de maintenance mobile (1) selon la revendication 10, dans lequel le processeur (6) est configuré pour :
crypter le registre lu dans la mémoire (15) pour produire des données de liste blanche cryptées ; et
envoyer les données de liste blanche cryptées à l'autre dispositif de maintenance mobile (1) via l'au moins une deuxième interface de communication (3).

12. Support lisible par ordinateur non transitoire tangible ayant des instructions exécutables par un processeur (6) d'un dispositif de maintenance mobile (1) qui, lorsqu'elles sont exécutées par le processeur (6), amènent le processeur (6) du dispositif de maintenance mobile (1), le dispositif de maintenance mobile (1) comprenant au moins une première interface de communication (2) et une mémoire (15), à effectuer :
la réception de données d'identité indiquant une identité d'un appareil (7) à partir de l'au moins une première interface de communication (2) ;
les instructions amènent le processeur (6) du dispositif de maintenance mobile (1) à effectuer :
la lecture, dans la mémoire (15), d'un registre avec une pluralité d'entrées ;
la production d'une valeur numérique comme étant une fonction des données d'identité reçues, la fonction des données d'identité reçues étant choisie parmi l'une de :
une fonction d'identité ; ou
une fonction de hachage ;
la comparaison de la valeur numérique avec la pluralité d'entrées du registre ;
dans lequel le dispositif de maintenance mobile (1) comprend au moins une deuxième interface de communication (3) configurée pour une communication bidirectionnelle avec un serveur distant (8) ; le processeur (6) étant couplé en communication à l'au moins une deuxième interface de communication (3), le processeur (6) étant configuré pour :
recevoir des données de liste blanche indiquant un registre avec une pluralité d'entrées à partir de l'au moins une deuxième interface de communication (3) ;
produire le registre avec une pluralité d'entrées à partir des données de liste blanche reçues ; et
écrire le registre avec une pluralité d'entrées dans la mémoire (15), et
effectuer une maintenance technique sur l'appareil (7) si la valeur numérique correspond à au moins une entrée de la pluralité d'entrées du registre.
